# EUROPÄISCHE PATENTANMELDUNG

(11) **EP 4 135 169 A1**
(43) Veröffentlichungstag der Anmeldung: **15.02.2023**
(21) Anmeldenummer: 22187218.7
(22) Anmeldetag: 27.07.2022
(51) Int. Cl.: H02K 9/08, H02K 5/173, H02K 21/22

(54) **AUSSENLÄUFERMOTOR MIT EINEM KÜHLRAD ZUR KÜHLUNG DES STATORS**

(30) Priorität: 09.08.2021 DE 102021120673
(71) Anmelder: ebm-papst Mulfingen GmbH & Co. KG, 74673 Mulfingen (DE)
(72) Erfinder: Häfner, Jochen, 74572 Blaufelden (DE)
(74) Vertreter: Staeger & Sperling Partnerschaftsgesellschaft mbB

(57) **Zusammenfassung**

Die Erfindung betrifft einen Außenläufermotor (1) mit einem Stator (10) und einem Rotor (20) sowie einem mit dem Rotor (20) um eine Rotationsachse (R) und den Stator (10) rotierbaren Kühlrad (30) zur Kühlung des Stators (10), wobei der Stator (10) einen parallel zu der Rotationsachse (R) durchströmbaren Innenabschnitt (11) und einen parallel zu der Rotationsachse (R) durchströmbaren Außenabschnitt (12) aufweist, welcher den Innenabschnitt (11) ringförmig umläuft und in Radialrichtung (X) strömungstechnisch von dem Innenabschnitt (11) getrennt ist, wobei das Kühlrad (30) eine Vielzahl von Schaufeln (33) aufweist, welche benachbart zu dem Stator (10) angeordnet und ausgebildet sind, an einem Außendurchmesser (32) des Kühlrades (30) benachbart zu dem Außenabschnitt (12) einen Überdruck und an einem Innendurchmesser (31) des Kühlrades (30) benachbart zu dem Innenabschnitt (11) einen Unterdruck zu erzeugen, sodass durch das Kühlrad (30) eine gerichtete von dem Außendurchmesser (32) des Kühlrades (30) durch den Außenabschnitt (12) und den Innenabschnitt (11) zu dem Innendurchmesser (31) des Kühlrades (30) strömender Luftstrom (L) erzeugbar ist.

## Beschreibung

Die Erfindung betrifft einen Außenläufermotor mit einem Stator und einem Rotor sowie einem mit dem Rotor um eine Rotationsachse und den Stator rotierbaren Kühlrad zur Kühlung des Stators mittels eines gerichteten Luftstroms.

Aus dem Stand der Technik ist eine Vielzahl von Elektromotoren bekannt, bei welchen Rotor und/oder Stator gekühlt werden. Dabei ist die Kühlung des Elektromotors bzw. dessen Komponenten für dessen Leistungsdichte ausschlaggebend, da mit einer Kühlung bzw. einer verbesserten Kühlung des Elektromotors eine entsprechend höhere Motorleistung erzeugt werden kann.

Insbesondere bei Außenläufermotoren, bei welchen also der Rotor um einen innerhalb des Rotors angeordneten Stator rotiert, wird im Stand der Technik meist eine undefinierte Luftströmung genutzt, durch welche Luft verwirbelt und die Wärme vom Stator nur undefiniert bzw. vergleichsweise schlecht abgeführt werden kann.

Der Erfindung liegt deshalb die Aufgabe zugrunde, die vorgenannten Nachteile zu überwinden und einen Außenläufermotor mit einer Kühlung bereitzustellen, durch welche eine definierte und hohe Kühlung des Motors realisierbar und eine entsprechend hohe Leistungsdichte des Elektromotors erreichbar ist.

Diese Aufgabe wird durch die Merkmalskombination gemäß Patentanspruch 1 gelöst.

Erfindungsgemäß wird daher ein Außenläufermotor mit einem Stator und einem Rotor sowie einem mit dem Rotor um eine Rotationsachse und den Stator rotierbaren Kühlrad zur Kühlung des Stators vorgeschlagen. Der Stator weist einen parallel zu der Rotationsachse durchströmbaren Innenabschnitt und einen parallel zu der Rotationsachse durchströmbaren Außenabschnitt auf, welcher den Innenabschnitt ringförmig umläuft und in Radialrichtung insbesondere im Bereich des Stators strömungstechnisch von dem Innenabschnitt getrennt ist, sodass also zumindest im Stator keine unmittelbare Luftströmung von dem Außenabschnitt zu dem Innenabschnitt möglich ist. Das Kühlrad weist eine Vielzahl von Schaufeln auf, welche benachbart und vorzugsweise unmittelbar benachbart zu dem Stator angeordnet und ausgebildet sind, an einem Außendurchmesser des Kühlrades benachbart zu dem Außenabschnitt des Stators einen Überdruck und an einem Innendurchmesser des Kühlrades benachbart zu dem Innenabschnitt des Stators einen Unterdruck zu erzeugen, sodass durch das Kühlrad eine gerichtete von dem Außendurchmesser des Kühlrades durch den Außenabschnitt und den Innenabschnitt zu dem Innendurchmesser des Kühlrades strömender Luftstrom erzeugbar ist.

Da die Schaufeln benachbart und vorzugsweise unmittelbar benachbart zu dem Stator angeordnet sind, kann die Luft nicht unmittelbar von dem Überdruckbereich am Außendurchmesser des Kühlrades bzw. Außenabschnitt des Stators zu dem Unterdruckbereich am Innendurchmesser des Kühlrades bzw. Innenabschnitt des Stators strömen, sondern muss durch den Außenabschnitt und durch den Innenabschnitt des Stators strömen bzw. den Stator durchströmen.

Dabei weist das Kühlrad bzw. die Schaufeln des Kühlrades zu dem Stator einen Luftspalt auf, welcher zwar eine Rotation des Kühlrades gegenüber dem Stator zulässt, bei einer Rotation des Kühlrades aber keine unmittelbare Luftströmung bzw. Rückströmung der Luft von dem Außendurchmesser bzw. Außenabschnitt zu dem Innendurchmesser bzw. Innenabschnitt erlaubt. Das kann erreicht werden, indem der Luftspalt entsprechend schmal ausgebildet bzw. die Schaufeln des Kühlrades entsprechend nah an dem Stator angeordnet werden.

Zum Ausgleich des Luftdrucks zwischen dem Bereich mit dem Überdruck am Außendurchmesser des Kühlrades und dem Bereich mit dem Unterdruck am Innendurchmesser des Kühlrades wird daher eine gerichtete Luftströmung durch die durchströmbaren Abschnitte (Außenabschnitt, Innenabschnitt) des Stators erzeugt, welche auf einer von dem Kühlrad abgewandten Seite des Stators strömungstechnisch verbunden sind, sodass die durch den Stator strömende Luft insbesondere im Bereich des Außenabschnitts des Stators Wärme aufnimmt und an kühlere Bereiche des Stators bzw. des Außenläufers abgibt.

Eine vorteilhafte Weiterbildung des Außenläufermotors sieht vor, dass das Kühlrad an einer dem Stator zugewandten Seite eines Lagerschilds fixiert ist, über welches der Rotor rotierbar an dem Stator gelagert ist.

Hierfür kann das Kühlrad beispielsweise Rastelemente aufweisen, durch welche es mit von dem Lagerschild bereitgestellten Gegenrastabschnitten verrastbar und dadurch in Radialrichtung und Umlaufrichtung um die Rotationsachse an dem Lagerschild fixierbar ist.

Weiter kann vorgesehen sein, dass der Außenläufermotor ferner ein den Stator umgebendes, mit dem Rotor rotierbares und einseitig von dem Lagerschild verschlossenes Gehäuse aufweist, welches beispielsweise glockenförmig bzw. als Rotorglocke ausgebildet sein kann. Eine durch das Gehäuse und das Lagerschild gebildete Einhausung ist strömungstechnisch dicht ausgebildet. Dabei ist unter strömungstechnisch dicht zu verstehen, dass die Einhausung den Stator luftdicht von einer die Einhausung umgebenden Umgebung trennt oder zumindest keine für die Kühlung des Stators relevante Luftströmung durch die Einhausung möglich ist.

Um eine Übertragung der Wärme von dem Luftstrom auf kühlere Bereiche des Außenläufermotors zu unterstützen, kann vorgesehen sein, dass an dem Gehäuse und/oder dem Lagerschild Kühlrippen vorgesehen sind, durch welche eine mit dem Luftstrom beispielsweise von Statorwicklungen oder allgemein dem Außenabschnitt des Stators aufgenommene und entsprechend mit dem Luftstrom transportierte Wärme aus dem Luftstrom abführbar ist. Entsprechend kann die Wärme von den Statorwicklungen an die mit der Luftströmung transportierte Luft und von der Luft insbesondere über die Kühlrippen an das Gehäuse und/oder das Lagerschild bzw. die Einhausung abgegeben werden, sodass das Gehäuse die Wärme nach außen bzw. in die die Einhausung umgebende Umgebung abtransportiert und die Statorwicklungen mithin gekühlt werden können.

Um an der von dem Kühlrad abgewandten Seite des Stators eine Luftströmung zwischen dem Außen- und dem Innenabschnitt des Stators zu ermöglichen, ist gemäß einer vorteilhaften Weiterbildung an einer entlang der Rotationsachse von dem Kühlrad abgewandten Seite des Stators ein den Außenabschnitt strömungstechnisch mit den Innenabschnitt verbindender Freiraum vorgesehen. Der Freiraum kann dabei beispielsweise von dem Stator und dem Gehäuse begrenzt werden. Alternativ kann der Freiraum bzw. ein den Außenabschnitt mit dem Innenabschnitt verbindender Abschnitt auch innerhalb des Stators und vorzugsweise an einem von dem Kühlrad abgewandten Ende des Stators ausgebildet sein.

Ferner kann der Stator eine Vielzahl von Statorzähnen aufweisen, welche jeweils einen Wicklungsabschnitt zur Aufnahme von Statorwicklungen in dem Außenabschnitt des Stators und einen Anbindungsabschnitt zur Anbindung des Stators an eine Achse des Elektromotors in dem Innenabschnitt des Stators aufweisen. Dabei sind vorzugsweise Zwischenräume zwischen den Wicklungen bzw. Zwischenräume zwischen den Wickelabschnitten der Statorzähne durchströmbar. Im Bereich der Anbindungsabschnitte sind vorzugsweise Zwischenräume zwischen den Anbindungsabschnitten der Statorzähne durchströmbar oder hierfür Kühlkanäle vorgesehen.

Gemäß einer vorteilhaften Weiterbildung kann der Stator aus einer Vielzahl von Einzelzähnen gebildet sein, welche an einem Verbindungsabschnitt in Umfangsrichtung miteinander mechanisch verbunden sind.

Weiter kann der Stator ein den Innenabschnitt von dem Außenabschnitt strömungstechnisch trennendes Ringelement aufweisen.

Ist der Stator aus einer Vielzahl von Einzelzähnen gebildet, kann das Ringelement durch die Verbindungsabschnitte der Einzelzähne gebildet werden, sodass also die miteinander in Verbindung stehenden Verbindungsabschnitte der Vielzahl von Einzelzähnen das Ringelement bilden.

Ist ein den Innenabschnitt von dem Außenabschnitt strömungstechnisch trennendes Ringelement vorgesehen, erstreckt sich dieses vorzugsweise parallel zu der Rotationsachse entlang des gesamten Stators.

Das in Umfangsrichtung um die Rotationsachse vorzugsweise vollständig geschlossene und sich parallel zu der Rotationsachse über die gesamte Länge des Stators erstreckende Ringelement kann entsprechend die strömungstechnische Trennung des Außenabschnitts und des Innenabschnitts des Stators derart ermöglichen, dass der Luftstrom zunächst den Außenbereich und anschließend den Innenbereich des Stators durchströmen muss, um einen Druckausgleich zwischen dem Überdruck und dem Unterdruck zu ermöglichen.

Weiter vorzugsweise verlaufen die Schaufeln des Kühlrades unmittelbar benachbart sowie zumindest abschnittsweise parallel zu dem Ringelement, sodass zwischen dem Ringelement und den Schaufeln bzw. einer durch die dem Ringelement zugewandte Grenzfläche aller Schaufeln des Kühlrades ein schmaler Luftspalt bestimmt ist. Dabei ist der Luftspalt derart ausgebildet, dass eine freie Rotation des Kühlrades gegenüber dem Stator ermöglicht, ein Rückströmen bzw. ein Strömen der Luft von dem Außenabschnitt zu dem Innenabschnitt nicht möglich ist.

Vorteilhaft ist auch eine Variante, bei welcher das Kühlrad einen geschlossenen Ring aufweist, auf welchem die Schaufeln in Radialrichtung verlaufen und von welchem die Schaufeln parallel zu der Rotationsachse in Richtung des Stators abstehen.

Der Ring kann dabei zugleich der Montage an dem Lagerschild dienen. Beispielsweise kann er flächig auf dem Lagerschild aufliegen und/oder Rastelemente zur Verrastung mit Gegenrastelementen des Lagerschildes aufweisen.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: Schnitt durch einen Außenläufer;
- Fig. 2: Kühlrad eines Außenläufers.

Die Figuren sind beispielhaft schematisch. Gleiche Bezugszeichen in den Figuren weisen auf gleiche funktionale und/oder strukturelle Merkmale hin.

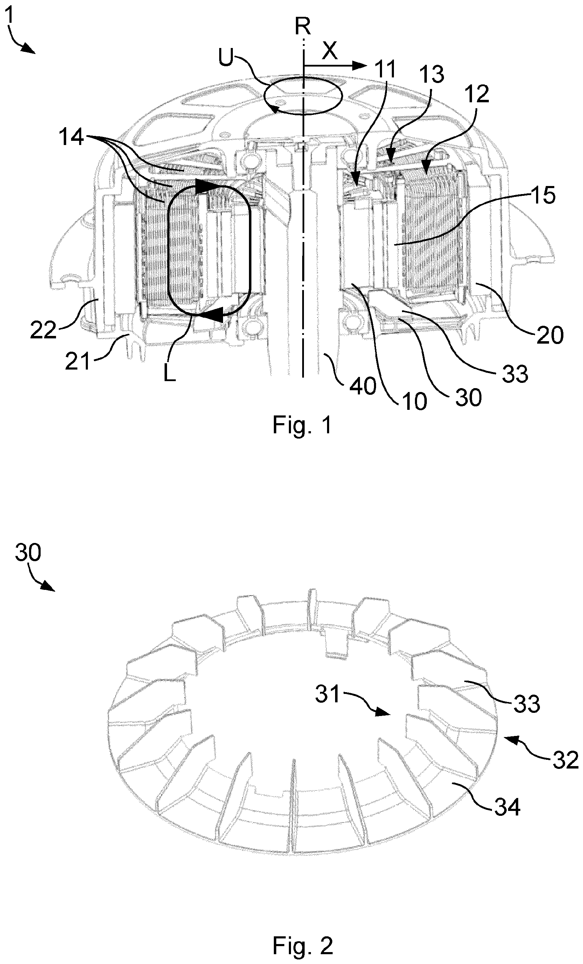

In Figur 1 ist eine Schnittansicht eines perspektivisch dargestellten Außenläufermotors 1 dargestellt, wobei ein in dem Außenläufermotor 1 gemäß Figur 1 verwendetes Kühlrad 30 in Figur 2 abgebildet ist. Dabei kann der Rotor 20 um den Stator 10 bzw. um die Rotationsachse R rotieren. Der Rotor 20 ist fest mit dem Gehäuse 22 und über das Gehäuse mit dem Lagerschild 21 verbunden sowie über Gehäuse 22 und Lagerschild 21 über dafür vorgesehene Lager um die Rotationsachse R rotier- bzw. drehbar an der Achse 40 fixiert, mit welcher der Stator 10 drehfest verbunden ist.

Vorliegend ist das Lagerschild 21 mit dem Gehäuse 22 verbunden und gegenüber diesem abgedichtet, sodass die durch das Gehäuse 22 und das Lagerschild 21 gebildete Einhausung im Wesentlichen luftdicht ist und eine Luftströmung in und aus der Einhausung verhindert wird.

Der Stator 10 weist radialinnen einen von Luft durchströmbaren Innenabschnitt 11 und einen radialäußeren von Luft druchströmbaren Außenabschnitt 12 auf, welcher also in Radialrichtung X weiter von der Rotationsachse R entfernt ist, als der Innenabschnitt 11.

Der Innenabschnitt 11 ist strömungstechnisch durch ein Ringelement 15 von dem Außenabschnitt 12 getrennt, sodass also zumindest am bzw. im Stator 10 keine Luft zwischen Innenabschnitt 11 und Außenabschnitt 12 strömen kann.

Ein Kühlrad 30 ist mit dem Rotor 20 rotierbar an dem Lagerschild 21 fixiert, wobei das Kühlrad 30 durch die Rotation um die Achse 40 bzw. um die Rotationsachse R sowie durch seine Schaufeln 33 an seinem Innendurchmesser 31 einen Unterdruck und an seinem Außendurchmesser 32 einen Überdruck erzeugt.

Die Schaufeln 33 des Kühlrades 30 verlaufen dabei mit einer Oberkante zumindest abschnittsweise parallel und benachbart zu dem Ringelement 15, wobei ein zwischen dem Ringelement 15 und den Schaufeln 33 bzw. den Oberkanten aller Schaufeln 33 ein Luftspalt gebildet wird, der zwar eine freie Rotation des Kühlrades 30 gegenüber dem Stator ermöglicht, ein unmittelbares Rückströmen von Luft zwischen dem Stator 10 und dem Kühlrad 30 von dem Bereich mit Überdruck zu dem Bereich mit Unterdruck jedoch erschwert bzw. verhindert.

Zum Ausgleich des Druckes in der Einhausung wird durch den Überdruck und den Unterdruck daher eine gerichtete Luftströmung L von dem Außendurchmesser 32 des Kühlrades 30 durch den Außenabschnitt 12 in einen Freiraum 13, welcher dem Lagerschild 21 bezüglich des Stators 10 gegenüberliegt, und von dem Freiraum 13 durch den Innenabschnitt 11 zu dem Innendurchmesser 31 des Kühlrades 30 erzeugt. Der Freiraum 13 verbindet dabei den Außenabschnitt 12 strömungstechnisch mit dem Innenabschnitt 11 des Stators 10 und wird entlang der Rotationsachse R von dem Stator 10 und dem Gehäuse 22 begrenzt.

Die gerichtete Luftströmung L bzw. die von der Luftströmung L transportierte Luft nimmt beim Durchströmen des Außenabschnitts 12 des Stators 10 von auf einzelne Statorzähne des Stators 10 gewickelte Statorwicklungen 14 Wärme auf und gibt die Wärme an kühlere Bereiche des Außenläufermotors 1, also beispielsweise an das Gehäuse 22, den Innenabschnitt 11 oder die Achse 40 ab, um so den Außenabschnitt 12 bzw. die Statorwicklungen 14 in definierter Weise durch die gerichtete Luftströmung L zu kühlen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Außenläufermotor (1) mit einem Stator (10) und einem Rotor (20) sowie einem mit dem Rotor (20) um eine Rotationsachse (R) und den Stator (10) rotierbaren Kühlrad (30) zur Kühlung des Stators (10),
wobei der Stator (10) einen parallel zu der Rotationsachse (R) durchströmbaren Innenabschnitt (11) und einen parallel zu der Rotationsachse (R) durchströmbaren Außenabschnitt (12) aufweist, welcher den Innenabschnitt (11) ringförmig umläuft und in Radialrichtung (X) strömungstechnisch von dem Innenabschnitt (11) getrennt ist,
wobei das Kühlrad (30) eine Vielzahl von Schaufeln (33) aufweist, welche benachbart zu dem Stator (10) angeordnet und ausgebildet sind, an einem Außendurchmesser (32) des Kühlrades (30) benachbart zu dem Außenabschnitt (12) einen Überdruck und an einem Innendurchmesser (31) des Kühlrades (30) benachbart zu dem Innenabschnitt (11) einen Unterdruck zu erzeugen, sodass durch das Kühlrad (30) eine gerichtete von dem Außendurchmesser (32) des Kühlrades (30) durch den Außenabschnitt (12) und den Innenabschnitt (11) zu dem Innendurchmesser (31) des Kühlrades (30) strömender Luftstrom (L) erzeugbar ist.

2. Außenläufermotor nach Anspruch 1,
wobei das Kühlrad (30) an einer dem Stator (10) zugewandten Seite eines Lagerschilds (21) fixiert ist, über welches der Rotor (20) rotierbar an dem Stator (10) gelagert ist.

3. Außenläufermotor nach Anspruch 2,
ferner aufweisend ein den Stator (10) umgebendes, mit dem Rotor (20) rotierbares und einseitig von dem Lagerschild (21) verschlossenes Gehäuse (22),
wobei eine durch das Gehäuse (22) und das Lagerschild (21) gebildete Einhausung strömungstechnisch dicht ausgebildet ist.

4. Außenläufermotor nach Anspruch 1 oder 2,
wobei an dem Gehäuse (22) und/oder dem Lagerschild (21) Kühlrippen vorgesehen sind, durch welche eine mit dem Luftstrom (L) transportierte Wärme aus dem Luftstrom (L) abführbar ist.

5. Außenläufermotor nach einem der vorhergehenden Ansprüche,
wobei an einer entlang der Rotationsachse (R) von dem Kühlrad (30) abgewandten Seite des Stators (10) ein den Außenabschnitt (12) strömungstechnisch mit den Innenabschnitt (11) verbindender Freiraum (13) vorgesehen ist.

6. Außenläufermotor nach einem der vorhergehenden Ansprüche,
wobei der Stator (10) eine Vielzahl von Statorzähnen aufweist, welche jeweils einen Wicklungsabschnitt zur Aufnahme von Statorwicklungen (14) in dem Außenabschnitt des Stators und einen Anbindungsabschnitt zur Anbindung des Stators (10) an eine Achse (40) des Elektromotors (1) in dem Innenabschnitt des Stators (10) aufweisen.

7. Außenläufermotor nach dem vorhergehenden Anspruch,
wobei der Stator (10) aus einer Vielzahl von Einzelzähnen gebildet ist, welche an einem Verbindungsabschnitt in Umfangsrichtung (U) miteinander mechanisch verbunden sind.

8. Außenläufermotor nach einem der vorhergehenden Ansprüche,
wobei der Stator (10) ein den Innenabschnitt (11) von dem Außenabschnitt (12) strömungstechnisch trennendes Ringelement (15) aufweist.

9. Außenläufermotor nach dem vorhergehenden Anspruch,
wobei das Ringelement (15) sich parallel zu der Rotationsachse (R) entlang des gesamten Stators (10) erstreckt.

10. Außenläufermotor nach einem der vorhergehenden Ansprüche,
wobei das Kühlrad (30) einen geschlossenen Ring (34) aufweist, auf welchem die Schaufeln (33) in Radialrichtung (X) verlaufen und von welchem die Schaufeln (33) parallel zu der Rotationsachse (R) in Richtung des Stators (10) abstehen.
